# EUROPÄISCHE PATENTSCHRIFT

(11) **EP 1 135 271 B1**
(45) Veröffentlichungstag und Bekanntmachung des Hinweises auf die Patenterteilung: **24.04.2002**
(21) Anmeldenummer: 99963261.5
(22) Anmeldetag: 19.11.1999
(51) Int. Cl.: B60J 7/06

(54) **SPRIEGELAUSBILDUNG**
BOW CONFIGURATION
CONFIGURATION D'ARCEAUX

(30) Priorität: 03.12.1998 DE 19855653
(43) Veröffentlichungstag der Anmeldung: 26.09.2001
(73) Patentinhaber: Edscha LKW-Schiebeverdecke GmbH, 42855 Remscheid (DE)
(72) Erfinder: DRASCH, Josef, D-94577 Winzer (DE); REMMEL, Roger, D-42897 Remscheid (DE)
(74) Vertreter: Sparing, Rolf Klaus
(86) Internationale Anmeldenummer: DE9903729
(87) Internationale Veröffentlichungsnummer: WO0032429

(56) Entgegenhaltungen:
- EP-A- 0 459 879
- EP-A- 0 885 759
- DE-U- 29 700 166

## Beschreibung

Die Erfindung betrifft eine Spriegelausbildung nach dem Oberbegriff des Anspruchs 1.

EP-A-0 459 879 zeigt ein Fahrzeugaufbau mit einer Mehrzahl von Spriegeln, die an oberen Längsgurten des Aufbaus verlagerbar sind, auf welchen Spriegeln eine Plane angeordnet ist, wobei die Spriegel mit Nietbolzen mit einem Rollenwagen verbunden sind.

Aus der Praxis sind Planendächer bekannt, bei welchen die Dachplane von nicht unbeweglich mit dem Gestell des Fahzeugaufbaus verbundenen Spriegeln getragen ist. Diese werden grundsätzlich dort eingesetzt, wo eine zumindest gelegentliche Beladung des Fahrzeugs oder Containers von oben erforderlich ist. Bei der einfachsten bekannten Bauart eines Planendachs der vorgenannten Gattung für Fahrzeugaufbauten oder Container sind die die Dachplane tragenden Spriegel derart mit den oberen Längsgurten des Fahrzeugaufbaues bzw. des Containers verbunden, daß sie ausschließlich durch Demontage von diesen gelöst werden können und die Plane zum Zwecke eines Öffnens des Planendachs aufgerollt werden muß. Bei einer solchen Gestaltungsform eines Planendachs können die Spriegel zwar in einfachster Weise ausgebildet sein, erfordert das Öffnen des Daches aber notwendigerweise einen erheblichen Arbeits- und Kraftaufwand.

Bei einer anderen aus der Praxis bekannten Bauart von Planendächern für Fahrzeugaufoauten oder Container ist vorgesehen, daß die die Dachplane tragenden Spriegel beidendig über Rollen oder dgl. längsverfahrbar in führungsschienenartigen Profilformen der oberen Längsgurte des Gestells eines Fahrzeugaufbaus abgestützt sind. Derartige Planendächer zeichnen sich zwar dadurch aus, daß ein Öffnen des Dachs durch Zusammenschieben von Plane und Spriegeln verhältnismäßig leicht zu bewerkstelligen ist, sind aber andererseits mit dem Nachteil eines erheblichen Herstellungsaufwands für die Ausstattung der Spriegel mit geeigneten Rollen behaftet. Dies insbesondere dann, wenn die Rollenanordnung im Zusammenhang mit dem Einsatz eines handelsüblichen Profilmaterials für die Ausbildung der oberen Längsgurte eines Fahrzeugaufbaus oder eines Containers in Form eines Rollenwagens gestaltet werden muß, wie dies bei den meisten der derzeit üblichen Schiebeverdecke der Fall ist.

Eine aus der Praxis bekannte Bauart von beidendig mit einem Rollenwagen zur Abstützung und Führung in Profilschienen ausgestatteten Spriegeln sieht vor, daß der Spriegel aus einem durch einen Längenabschnitt eines fortlaufenden Hohiprofilmaterials gebildeten Spriegelschaft und beidendig mit diesem verbundenen Rollenwagen besteht, wobei die Rollenwagen als selbständige Einheiten vorgefertigt und mit dem Spriegelschaft verbunden sind. Eine derartige Gestaltung bringt zwar infolge der Möglichkeit zur dezentralen Herstellung der Rollenwagen und der Einfachheit deren Verbindung mit dem Spriegelschaft eine Verbilligung der Spriegel mit sich, ist aber immer noch mit dem Aufwand für den Zusammenbau des aus mehreren Teilen bestehenden Spriegels behaftet.

Es ist die Aufgabe der Erfindung, eine Spriegelausbildung nach dem Oberbegriff des Anspruchs 1 zu schaffen, für Pianenverdecke bzw. Planendächer von Fahrzeugaufbauten oder Containern, welche eine Realisierung von Spriegeln beliebiger Form oder Größe zusammen mit den erforderlichen Lagerungen für Stütz- und Führungsrollen, insbesondere Rollenwagen, als einteilige Bauteile mit einem sehr geringen Aufwand gestattet und bei welcher darüber hinaus eine hinreichende Festigkeit auch der die Rollenwagen bildenden Bereiche eines Spriegels gewährleistet ist.

Diese Aufgabe wird bei der eingangs genannten Spriegelausbildung mit den kennzeichnenden Merkmalen des Anspruchs 1 gelöst.

Eine solche Spriegelausbildung eröffnet die Möglichkeit, einen Spriegel in seiner Gesamtheit, d.h. samt Spriegelschaft und Rollenlagerungen, insbesondere Rollenwagen, aus einem einfachen Hohlprofilabschnitt zu bilden und somit den herkömmlicherweise erforderlichen Montageaufwand für den Zusammenbau des Spriegels zu vermeiden.

Eine besonders geeignete Verfahrensweise zur Realisierung von zusammen mit ihren Auflagen an den oberen Längsgurten des Fahrzeugaufbaus einteilig ausgebildeten Spriegeln besteht darin, daß die Spriegel aus Längenabschnitten eines Hohlprofilmaterials beliebigen Profilquerschnitts bestehen, wobei die an deren beiden Enden angeordneten Rollenwagen durch spanlose Verformung des Hohlprofilmaterials gebildet sind.

in einer besonders bevorzugten Bauweise ist vorgesehen, daß das insbesondere den Schaftteil eines Spriegels bildende Hohlprofilmaterial einen quadratischen oder rechteckigen Profilquerschnitt aufweist und an beiden Endbereichen eines Spriegels zu einem doppellagigen Flachmaterialquerschnitt verquetscht sowie zur Bildung eines Rollenwagens wenigstens annähernd senkrecht zur Profilachse des Hohlprofilmaterials abgewinkelt ist.

Eine hervorragende Stabilität erreichen die Rollenwagen bildenden, zu doppellagigen Flachmaterialquerschnitten verquetschten und senkrecht zur Profilachse des Hohlprofilmaterials abgewinkelten Endbereiche der Spriegel dadurch, daß die beiden im Bereich jedes zu einem doppellagigen Flachmaterialquerschnitt verquetschten Endes eines einen Spriegel bildenden Hohlprofilmaterialabschnitts aufeinander aufliegenden Wandungsbereiche des Hohlprofilmaterials untereinander unlösbar, vorzugsweise über durchgreifende Mittel, insbesondere Nietbolzen, verbunden sind. Um die gewünschte Stabilität zu erreichen, kann erfindungsgemäß zwar auch vorgesehen sein, daß die aufeinander aufliegenden Wandungsbereiche des Hohlprofilmaterials im Wege der Anbringung von Schweißpunkten oder unter Anwendung eines anderen geeigneten Fügeverfahrens unlösbar und relativ zueinander unverschiebbar untereinander verbunden sind, jedoch wird im Interesse eines geringstmöglichen Herstellungsaufwands vorzugsweise vorgesehen, daß die die beiden aufeinander aufliegenden Wandungsbereiche jedes der zu einem doppellagigen Flachmaterialquerschnitt verquetschten Enden eines einen Spriegel bildenden Hohlprofilmaterialabschnitts durchgreifenden Nietbolzen durch die für die Verbindung der Lager für die Lauf- oder Führungsrollen eines Rollenwagens ohnehin erforderlichen Nietbolzen gebildet sind.

In weiterer Ausgestaltung der erfindungsgemäßen Spriegelausbildung kann zur Erhöhung der Stabilität der die Rollenwagen bildenden Endbereiche der Spriegel weiter vorgesehen sein, daß die Abwinkelung des zu einem doppellagigen Flachmaterialquerschnitt verquetschten Endes eines einen Spriegel bildenden Hohiprofilmaterialabschnittes eine in Verlängerung der Längserstreckung des Spriegels ausgerichtete Ausbauchung umfaßt und der doppellagige Flachmaterialquerschnitt im Bereich seiner Abwinkelung mit einer nach innen gerichteten Versteifungssicke versehen ist.

Im Einzelnen kann dann in jeweiliger Anpassung an die sonstigen Gegebenheiten desjenigen Verdecks, für welches der Spriegel jeweils bestimmt ist, weiter vorgesehen sein, daß die jeweils zu einem doppellagigen Flachmaterialquerschnitt verquetschten Enden eines einen Spriegel bildenden Hohlprofilmaterialabschnitts mit zwei um achsparallel zum Spriegelschaft ausgerichtete Achsen rotierenden Laufrollen und wenigstens einer um eine senkrecht zur Achse des Spriegelschaftes ausgerichtete Achse rotierenden Führungsrolle ausgestattet sind.

In weiterer Anpassung der Spriegelausbildung an besondere Ausbildungen desjenigen Verdecks für welches der jeweilige Spriegel bestimmt ist, kann ferner auch noch vorgesehen sein, daß die jeweils zu einem doppellagigen Flachmaterialquerschnitt verquetschten Enden eines einen Spriegel bildenden Hohlprofilmaterialabschnitts in Verlängerung der Spriegeloberfläche eine Befestigungsebene für benachbarte Spriegel untereinander verbindende Auflageelemente für ein Plane bilden, wobei die Auflageelemente aus einem halbstarren Material, insbesondere einem örtlich verstärkten Kunststoffmaterial, bestehen und vermittels Nietbolzen mit den Endbereichen des Spriegels verbunden sind.

Dabei ist nach einem weiteren Merkmal die erfindungsgemäße Spriegelausbildung nicht ausschließlich auf die Ausstattung des Spriegels mit Rollenanordnungen bzw. Rollenwagen beschränkt, sondern kann ebenso mit gleich großem Vorteil auch im Zusammenhang mit anderen Gestaltungsformen der Spriegelabstützung an den oberen Längsgurten eines Verdeckgestells angewandt werden, insbesondere dadurch, daß die zu einem doppellagigen Flachmaterialquerschnitt verquetschten Enden eines einen Spriegel bildenden Hohiprofilmaterialabschnitts jeweils ein Lager für ein den Spriegel gegen die Führungsbahnen der oberen Längsgurte des Aufbaues abstützendes Strebenpaar bilden.

Weitere Vorteile und Merkmale der Erfindung ergeben sich aus der nachfolgenden Beschreibung sowie aus den Unteransprüchen.

Die Erfindung wird nachstehend unter Bezugnahme auf die anliegenden Zeichnungen anhand eines bevorzugten Ausführungsbeispiels einer erfindungsgemäßen Spriegelausbildung näher erläutert.

Fig. 1 zeigt eine abschnittsweise Seitenansicht eines mit einem Rollenwagen ausgestatteten Spriegels.

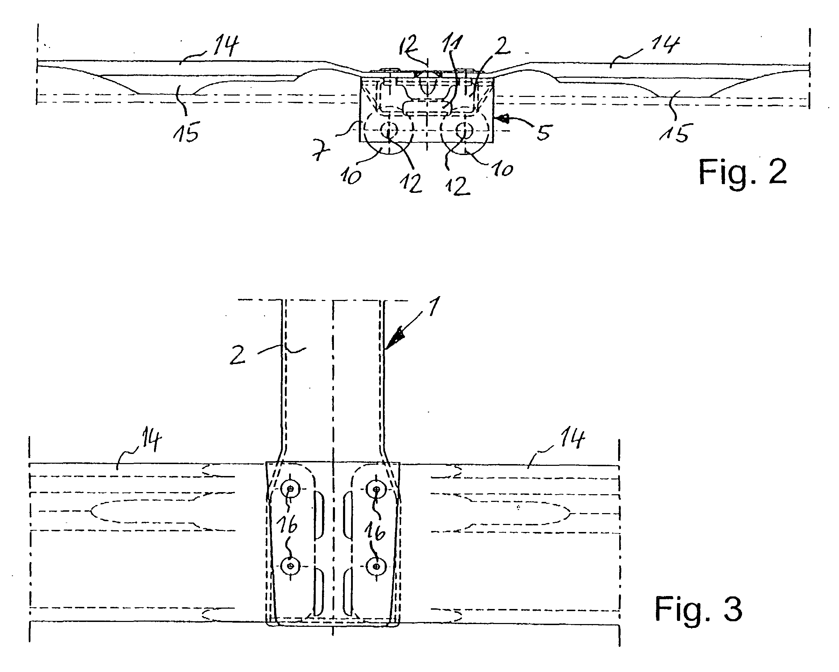

Fig. 2 zeigt eine Stirnansicht des Spriegels gemäß Fig. 1.

Fig. 3 zeigt eine Draufsicht auf den Spriegel gemäß Fig. 1 und 2.

Fig. 4 zeigt eine gleichfalls abschnittsweise Seitenansicht eines mit einem Rollenwagen ausgestatteten Spriegels im vergrößerten Maßstab.

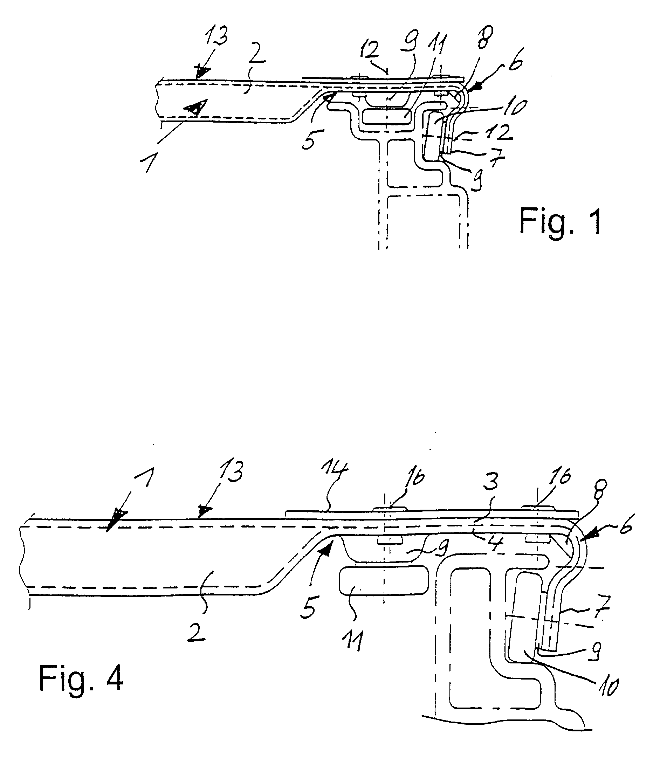

Der in der Zeichnung abschnittsweise dargestellte in der Vollständigkeit spiegelbildlich zur Darstellung ausgebildete Spriegel 1 ist, wie insbesondere in Fig. 1 angedeutet, aus einem einteiligen Längenabschnitt eines einen rechteckigen Profilquerschnitt aufweisenden Hohprofilmaterials, insbesondere eines dünnwandigen Hohlprofilmaterials aus einer Stahlqualität, hergestellt, das einen rechteckigen Profilquerschnitt aufweisende und in dieser Querschnittsform den Schaftteil 2 des Spriegels 1 bildende Hohlprofilmaterial ist, wie hauptsächlich aus den Darstellungen in Fig. 1 und 4 ersichtlich, in beiden Endbereichen des Spriegels 1 zu einer zwei aufeinander aufliegende Flachmaterialbereiche 3 und 4 aufweisenden Profilform verquetscht. In seinen beiden eine durch zwei aufeinander aufliegende Flachmaterialbereiche 3 und 4 gekennzeichnete Profilform aufweisenden Endbereichen ist der Spriegel 1 zur Bildung eines Rollenwagens 5 im wesentlichen senkrecht zur Profilachse seines Schaftteils 2 abgewinkelt, wobei in der gezeigten Ausführungsform zur Erhöhung der Stabilität des Rollenwagens 5 vorgesehen ist, daß die Abwinkelung 7 der zu einem doppellagigen Flachmaterialquerschnitt 3, 4 verquetschten Enden des Schaftteiles 2 eine in Verlängerung der Längserstreckung des Spriegelschafts 2 ausgerichtete Ausbauchung 6 umfaßt und der doppellagige Flachmaterialquerschnitt 3, 4 im Bereich seiner Abwinkelung 7 mit einer nach innen gerichteten Versteifungssicke 8 versehen ist. Die aufeinander aufliegenden Wandungsbereiche 3, 4 des Hohiprofilmaterials sind in der gezeigten Ausführungsform vermittels der sie durchgreifenden und für die Verbindung der Lager 9 für die Lauf- 10 und Führungsrollen 11 des Rollenwagens 5 ohnehin erforderlichen Nietbolzen 12 unlösbar und unverschiebbar untereinander verbunden, wobei zwei um achsparallel zum Spriegelschaft ausgerichtete Achsen rotierende Laufrollen 10 und eine zu diesen auf Lücke stehend angeordnete, um eine vertikale Achse rotierende Führungsrolle 11 vorgesehen sind. Die jeweils zu einem doppellagigen Flachmaterialquerschnitt 3, 4 verquetschten Enden des den Spriegelschaft 2 bildenden Hohlprofilmaterialabschnitts sind in Verlängerung der Spriegeloberfläche 13 ausgerichtet und bilden eine Befestigungsebene für benachbarte Spriegel 1 untereinander verbindende Auflageelemente 14 für eine im einzelnen nicht dargestellte Plane, wobei die Auflageelemente 14 aus einem halbstarren Material, insbesondere einem örtlich, insbesondere bei 15 verstärkten Kunststoffmaterial bestehen und vermittels Nietbolzen 16 mit den Endbereichen des Spriegels 1 verbunden sind.

## Patentansprüche

1. Spriegelausbildung für zusammenschiebbare Verdecke an Fahrzeugaufbauten oder Containern mit starren oder flexiblen Stirn- und Seitenwandungen und die Aufbauhöhe nach oben begrenzenden, durch Profilschienen gebildeten oberen Längsgurten, bei dem eine den Dachbereich des Aufbaus übergreifende Plane von in vorgegebenen gleichmäßigen Abständen voneinander angeordneten, die Ladeflächenbreite überspannenden und an den Längsgurten des Aufbaus abgestützten Spriegeln (1) getragen ist, die an ihren beiden Enden jeweils vermittels eines die Längsgurte wenigstens teilweise umgreifenden Rollenwagens (5) bzw. einer entsprechenden Rollenanordnung sowohl in horizontaler als auch in vertikaler Richtung abgestützt und längsverschiebbar an komplementär ausgebildeten Führungsbahnen der oberen Längsgurte des Aufbaus geführt sind,
**dadurch gekennzeichnet,**
**daß** der Spriegelschaft (2) zusammen mit den ihn beidendig an den Führungsbahnen der oberen Längsgurte des Aufbaus führenden und abstützenden Rollenwagen (5) einteilig ausgebildet ist.

2. Spriegelausbildung nach Anspruch 1, **dadurch gekennzeichnet, daß** die Spriegel aus Längenabschnitten eines Hohlprofilmaterials bestehen, und daß die an den beiden Enden des Spriegelschafts (2) angeordneten Rollenwagen (5) durch spanlose Verformung (3, 4) des Hohlprofilmaterials gebildet sind.

3. Spriegelausbildung nach Anspruch 1 oder 2, **dadurch gekennzeichnet, daß** ein insbesondere den Schaftteil eines Spriegels (1) bildende Hohlprofilmaterial einen quadratischen oder rechteckigen Profilquerschnitt aufweist und in beiden Endbereichen eines Spriegels zu einem doppellagigen Flachmaterialquerschnitt (3, 4) verquetscht sowie zur Bildung eines Rollenwagens (5) wenigstens annähernd senkrecht zur Profilachse des Hohlprofilmaterials abgewinkelt ist.

4. Spriegelausbildung nach Anspruch 3, **dadurch gekennzeichnet, daß** die beiden im Bereich jedes zu einem doppellagigen Flachmaterialquerschnitt verquetschten Endes eines einen Spriegel (1) bildenden Hohlprofilmaterialabschnitts aufeinander aufliegenden Wandungsbereiche (3, 4) des Hohiprofilmaterials untereinander unverschieblich, insbesondere über durchgreifende Mittel, vorzugsweise Nietbolzen (16), verbunden sind.

5. Spriegelausbildung nach Anspruch 4, **dadurch gekennzeichnet, daß** der den zu doppellagigen Flachmaterialquerschnitt verquetschten Enden eines Hohlprofilmaterialabschnitts durchgreifende Nietbolzen (12) zugleich die Verbindung mit einem Lager (9) für eine Lauf- oder Führungsrolle (11) eines Rollenwagens (5) bilden.

6. Spriegelausbildung nach einem der Ansprüche 1 bis 5, **dadurch gekennzeichnet, daß** die Abwinkelung (7) des zu einem doppellagigen Flachmaterialquerschnitt verquetschten Endes eines einen Spriegel (1) bildenden Hohlprofilmaterialabschnitts eine in Verlängerung der Längserstreckung des Spriegels (1) ausgerichtete Ausbauchung (6) umfaßt und daß der doppellagige Flachmaterialquerschnitt im Bereich seiner Abwinkelung (7) mit einer nach innen gerichteten Versteifungssicke (8) versehen ist.

7. Spriegelausbildung nach einem der Ansprüche 1 bis 6, **dadurch gekennzeichnet, daß** die jeweils zu einem doppellagigen Flachmaterialquerschnitt verquetschten Enden eines einen Spriegel (1) bildenden Hohlprofilmaterialabschnitts mit zwei um achsparallel zum Spriegelschaft (2) ausgerichtete Achsen rotierenden Laufrollen (10) und wenigstens einer um eine senkrecht zur Achse des Spriegelschafts (2) ausgerichtete Achse rotierenden Führungsrolle (11) ausgestattet sind.

8. Spriegelausbildung nach einem der Ansprüche 1 bis 7, **dadurch gekennzeichnet, daß** die jeweils zu einem doppellagigen Flachmaterialquerschnitt verquetschten Enden eines einen Spriegel (1) bildenden Hohiprofilmaterialabschnitts in Verlängerung der Spriegeloberfläche (13) eine Befestigungsebene für benachbarte Spriegel (1) untereinander verbindende Auflageelemente (14) für ein Plane bilden, wobei die Auflageelemente (14) aus einem halbstarren Material, insbesondere einem örtlich (15) verstärkten Kunststoffmaterial, bestehen und vermittels Nietbolzen (16) mit den Endbereichen des Spriegels (1) verbunden sind.

9. Spriegelausbildung nach einem der Ansprüche 1 bis 8, **dadurch gekennzeichnet, daß** die zu einem doppellagigen Flachmaterialquerschnitt verquetschten Enden eines einen Spriegel (1) bildenden Hohlprofilmaterialabschnitts jeweils ein Lager für ein den Spriegel (1) gegen die Führungsbahnen der oberen Längsgurte des Aufbaus abstützendes Strebenpaar bilden.

## Claims

1. Bow formation for folding tops which can be pushed together on vehicle bodies or containers having rigid or flexible end walls and side walls and upper longitudinal flanges which limit the height of the body upwards and are formed by profiled rails, wherein a tarpaulin which fits over the roof region of the body is supported by bows (1) which are arranged at predetermined, uniform spacings from one another and span the width of the loading surface, said bows being supported on the longitudinal flanges of the body and supported at their two ends both in the horizontal and vertical directions in each case by means of a roller carriage (5) which at least partially grips around the longitudinal flanges or by means of a corresponding roller arrangement, and are guided in a longitudinally displaceable manner on complementarily designed guide tracks of the upper longitudinal flanges of the body,
**characterized in**
**that** the bow shaft (2) is designed as a single piece together with the roller carriages (5) which guide and support it at both ends on the guide tracks of the upper longitudinal flanges of the body.

2. Bow formation according to claim 1, **characterized in that** the bows consist of length sections of a hollow profile material, and that the roller carriages (5) which are arranged at the two ends of the bow shaft (2) are formed by non-cutting deformation (3, 4) of the hollow profile material.

3. Bow formation according to claim 1 or 2, **characterized in that** a hollow profile material in particular forming the shaft part of a bow (1) has a square or rectangular profile cross section and is compressed in both end regions of a bow to form a double-layered flat material cross section (3, 4) and, in order to form a roller carriage (5), is angled at least approximately perpendicularly with respect to the profile axis of the hollow profile material.

4. Bow formation according to claim 3, **characterized in that** the two wall regions (3, 4) of the hollow profile material which rest on each other in the region of each end, compressed to form a double-layered flat material cross section, of a hollow-profile-material section forming a bow (1) are connected non-displaceably to each other, in particular via means reaching through them, preferably rivet bolts (16).

5. Bow formation according to claim 4, **characterized in that** the rivet bolts (12) reaching through the ends, compressed to form a double-layered flat material cross section, of a hollow-profile-material section at the same time form the connection to a bearing (9) for a running or guide roller (11) of a roller carriage (5).

6. Bow formation according to one of claims 1 to 5, **characterized in that** the angled portion (7) of the end, compressed to form a double-layered flat material cross section, of a hollow-profile-material section forming a bow (1) includes a bulge (6) which is orientated as an extension of the longitudinal extent of the bow (1), and that the double-layered flat material cross section is provided in the region of its angled portion (7) with an inwardly directed reinforcing bead (8)

7. Bow formation according to one of claims 1 to 6, **characterized in that** the ends, compressed in each case to form a double-layered flat material cross section, of a hollow-profile-material section forming a bow (1) are provided with two running rollers (10) rotating about axes orientated in an axially parallel manner to the bow shaft (2) and with at least one guide roller (11) rotating about an axis orientated perpendicularly with respect to the axis of the bow shaft (2).

8. Bow formation according to one of claims 1 to 7, **characterized in that** the ends, compressed in each case to form a double-layered flat material cross section, of a hollow-profile-material section forming a bow (1) form, as an extension of the bow surface (13), a fastening plane for bearing elements (14) for a tarpaulin, which bearing elements connect adjacent bows (1) to one another, the bearing elements (14) consisting of a semirigid material, in particular of a plastic material reinforced locally (15), and being connected to the end regions of the bow (1) by means of rivet bolts (16).

9. Bow formation according to one of claims 1 to 8, **characterized in that** the ends, compressed to form a double-layered flat material cross section, of a hollow-profile-material section forming a bow (1) each form a bearing for a pair of struts supporting the bow (1) against the guide tracks of the upper longitudinal flanges of the body.

## Revendications

1. Configuration d'arceaux pour des bâches repliables sur des carrosseries de véhicules ou des conteneurs, avec des parois frontales et latérales rigides ou flexibles, et des membrures longitudinales supérieures formées par des glissières profilées, limitant vers le haut la hauteur de construction, pour laquelle une bâche, recouvrant une zone de toit de la carrosserie, est portée par des arceaux (1) disposés avec des espacements réguliers prédéterminés les uns par rapport aux autres, arceaux couvrant la largeur de la surface de chargement et soutenus sur les membrures longitudinales de la carrosserie, arceaux qui, à chacune de leurs deux extrémités, sont soutenus au moyen d'un chariot à galets entourant au moins partiellement les membrures longitudinales ou d'un agencement à galets correspondant tant en direction horizontale qu'également en direction verticale et étant guidés de façon déplaçable longitudinalement sur des pistes de guidage de configuration complémentaire appartenant aux membrures longitudinales supérieures de la carrosserie,
**caractérisée en ce que**
la tige d'arceau (2), conjointement avec les chariots à galets (5) assurant le guidage et l'appui de celle-ci aux deux extrémités sur les pistes de guidage des membrures longitudinales de la carrosserie, est réalisée d'une seule pièce.

2. Configuration d'arceaux selon la revendication 1, **caractérisée en ce que** les arceaux sont constitués de tronçons de longueur d'un matériau profilé creux, et **en ce que** les chariots à galets (5) disposés aux deux extrémités de la tige d'arceau (2) sont formés par une déformation (3, 4), faite sans production de copeaux, du matériau du profilé creux.

3. Configuration d'arceaux selon la revendication 1 ou 2, **caractérisée en ce qu'**un matériau de profilé creux formant en particulier la partie tige d'un arceau (1) présente une section transversale de profilé carré ou rectangulaire et, dans les deux zones d'extrémité d'un arceau, est écrasé pour donner une section transversale des matériaux plats (3, 4) à double couche, ainsi que pour former un chariot à galets (5), est coudé au moins à peu près perpendiculairement par rapport à l'axe de profilé du matériau de profilé creux.

4. Configuration d'arceaux selon la revendication 3, **caractérisée en ce que** les deux zones de paroi (3, 4), placées l'une sur l'autre dans la zone de chaque extrémité, écrasée pour donner une section transversale de matériau plat à double couche, d'un tronçon de matériau profilé creux, formant un arceau (1), du matériau de profilé creux sont reliés ensemble de façon immobilisée, en particulier par des moyens traversant, de préférence des boulons rivés (16).

5. Configuration d'arceaux selon la revendication 4, **caractérisée en ce que** le boulon rivé (12) traversant les extrémités écrasées pour donner une section transversale de matériau plat à double couche d'un tronçon de matériau profilé creux, forme en même temps la liaison à un palier (9) pour un galet de défilement ou de guidage (11) d'un chariot à galets (5).

6. Configuration d'arceaux selon l'une des revendications 1 à 5, **caractérisée en ce que** le coudage (7), de l'extrémité écrasée pour donner une section transversale de matériau plat à double couche d'un tronçon de matériau profilé creux formant un arceau (1), comprend un bossage (6) orienté dans le prolongement de la longueur ou de la direction longitudinale de l'arceau (1), et **en ce que** la section transversale de matériau plat à double couche est munie, dans la zone de son coudage (7), d'une moulure de rigidification (8) orientée vers l'intérieur.

7. Configuration d'arceaux selon l'une des revendications 1 à 6, **caractérisée en ce que** les extrémités, chaque fois écrasées pour donner une section transversale de matériau plat à double couche, d'un tronçon de matériau profilé creux formant un arceau (1) sont munies de deux galets de roulement (10) tournant autour d'axes orientés parallèlement à l'axe de la tige d'arceau (2) et d'au moins un galet de guidage (11) tournant autour d'un axe orienté perpendiculairement par rapport à l'axe de la tige d'arceau (2).

8. Configuration d'arceaux selon l'une des revendications 1 à 7, **caractérisée en ce que** les extrémités, chaque fois écrasées pour donner une section transversale de matériau plat à double couche, d'un tronçon de matériau profilé creux formant un arceau (1) forment, dans le prolongement de la surface d'arceau (13), un plan de fixation pour des éléments de pose (14) pour une bâche, reliant ensemble des arceaux (1) voisins, les éléments de pose (14) étant constitués d'un matériau semi-rigide, en particulier d'un matériau synthétique renforcé localement (15) et étant reliés, au moyen de boulons rivés (16), aux zones d'extrémité de l'arceau (1).

9. Configuration d'arceaux selon l'une des revendications 1 à 8, **caractérisée en ce que** les extrémités, écrasées pour donner une section transversale de matériau plat à double couche, d'un tronçon de matériau profilé creux formant un arceau (1) forment chacune un palier pour une paire d'entretoises soutenant l'arceau (1) par rapport aux pistes de guidage des membrures longitudinales supérieures de la carrosserie.
